(19) Europäisches Patentamt
European Patent Office
Office européen des brevets

(11) Veröffentlichungsnummer: **0 194 434**
**B1**

(12) **EUROPÄISCHE PATENTSCHRIFT**

(45) Veröffentlichungstag der Patentschrift: **19.04.89**

(51) Int. Cl.⁴: **C 07 C 125/06**, C 08 F 222/22

(21) Anmeldenummer: **86101137.7**

(22) Anmeldetag: **29.01.86**

ERRATUM

| DIE TEXTSTELLE :<br>TEXT PUBLISHED :<br>LE PASSAGE SUIVANT : | (SEITE, SPALTE, ZEILE)<br>(PAGE, COLUMN, LINE)<br>(PAGE,COLONNE,LIGNE) | | LAUTET BERICHTIGT:<br>SHOULD READ :<br>DEVRAIT ETRE LU : |
|---|---|---|---|
| 2. Verfahren nach Anspruch 1, | 5 | 57 | 3. Verfahren nach Anspruch 2, |
| 3. Verfahren nach Anspruch 1 oder 2, | 5 | 59 | 4. Verfahren nach Anspruch 2 oder 3, |
| 4. Verfahren nach Anspruch 1 oder 2, | 5 | 61 | 5. Verfahren nach Anspruch 2 oder 3, |
| 5. Verfahren nach einem oder mehreren der Ansprüche 1 bis 4, | 5 | 63 | 6. Ausführungsform nach einem oder mehreren der Ansprüche 1 bis 5, |
| 6. Verwendung der polymerisierbaren Hydroxylgruppen | 6 | 12 | 7. Verwendung der polymerisierbaren Hydroxylgruppen |

Tag der Entscheidung über die Berichtigung / Date of decision on rectification: / Date de décision portant sur modification: 20.3.90

Ausgabe- und Veröffentlichungstag: / Issue and publication date: / Date d'edition et de publication: 4.7.90

Patbl.Nr / EPB no: / Bull. no: 90/27

(19) Europäisches Patentamt
European Patent Office
Office européen des brevets

(11) Veröffentlichungsnummer: **0 194 434**
**B1**

(12) **EUROPÄISCHE PATENTSCHRIFT**

(45) Veröffentlichungstag der Patentschrift: **19.04.89**

(51) Int. Cl.⁴: **C 07 C 125/06**, C 08 F 222/22

(21) Anmeldenummer: **86101137.7**

(22) Anmeldetag: **29.01.86**

(54) **Polymerisierbare, Hydroxylgruppen tragende Carbamoyloxyalkyldicarbonsäureester, Verfahren zu ihrer Herstellung und ihrer Verwendung.**

(30) Priorität: **08.02.85 DE 3504336**

(43) Veröffentlichungstag der Anmeldung: **17.09.86 Patentblatt 86/38**

(45) Bekanntmachung des Hinweises auf die Patenterteilung: **19.04.89 Patentblatt 89/16**

(84) Benannte Vertragsstaaten: **AT BE CH DE FR GB IT LI NL SE**

(56) Entgegenhaltungen:
**DE-A-2 422 170**
**US-A-3 479 328**

(73) Patentinhaber: **HOECHST AKTIENGESELLSCHAFT, Postfach 80 03 20, D-6230 Frankfurt am Main 80 (DE)**

(72) Erfinder: **Just, Christoph, Dr., Akazienweg 8, D-6272 Niedernhausen/Taunus (DE)**
Erfinder: **Plath, Dieter, Dr., Hildastrasse 32, D-6200 Wiesbaden (DE)**
Erfinder: **Walz, Gerd, Dr., Pfingstbornstrasse 99, D-6200 Wiesbaden (DE)**

**EP 0 194 434 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Es ist bekannt, hydroxylgruppenhaltige Polyacrylverbindungen mit Polyisocyanaten oder verkappten Polyisocyanaten zu härten.

Es ist ferner bekannt (US-3 479 328), Polymerisierbare Verbindungen herzustellen, die eine Urethangruppierung aber keine OH-Gruppen enthalten. Diese N-Alkylcarbamoyloxycarboxylate können homopolymerisiert oder mit anderen geeigneten Vinylmonomeren copolymerisiert werden, wobei die Carbamat-Gruppe erhalten bleibt. Hydroxylgruppenhaltige Monomere werden jedoch nicht eingesetzt, so daß die gebildeten Polymerisate nicht über OH-Gruppen mit dafür geeigneten Verbindungen, z. B. Polyisocyanaten und/oder Aminharzen vernetzt werden können.

Polymerisierbare N,N-disubstituierte Carbamoyloxyalkylcarbonsäureester sind beschrieben worden (DE-PS-2 422 170), die ebenfalls homopolymerisiert oder mit anderen α,β-olefiniach ungesättigten Monomeren copolymerisiert werden können. Die bekannten Verbindungen enthalten aber ebenfalls keine OH-Gruppen.

Gegenstand der Erfindung sind polymerisierbare, Hydroxylgruppen tragende Carbamoyloxyalkyldicarbonsäureester der allgemeinen Formel (I)

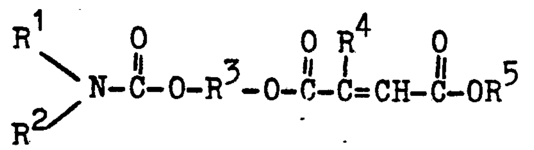

(I)

worin

$R^1$ Wasserstoff, Alkyl, Hydroxyalkyl mit jeweils 1 bis 30 C-Atomen im Alkylrest,

$R^2$ Alkyl, Hydroxyalkyl mit jeweils 1 bis 30 C-Atomen im Alkylrest oder den Rest

$$-(CH_2)_x-\overset{\displaystyle R^1}{\overset{|}{N}}-\overset{\displaystyle O}{\overset{\|}{C}}-O-R^3-OH$$

mit der Maßgabe, daß $R^1$ Wasserstoff und x eine ganze Zahl von 2 bis 10 ist,

$R^3$ lineares oder verzweigtes Alkylen mit 2 bis 5 C-Atomen,

$R^4$ Wasserstoff oder Methyl und

$R^5$ Hydroxyalkyl, Hydroxyaminoalkyl mit jeweils 2 bis 20 C-Atomen im Alkylrest oder ein solcher Alkylrest der noch Ester- und/oder Äthergruppen enthält, darstellt.

Vorzugsweise ist der Rest $R^5$ ein Hydroxyalkylrest oder ein Hydroxyalkylesterrest einer verzweigten gesättigten Fettsäure mit 9 bis 11 C-Atomen, mit jeweils 2 bis 14 C-Atomen in der Alkylgruppe.

Durch die gleichzeitige Anwesenheit von polymerisierbaren -C=C-Gruppen, Urethangruppen und Hydroxylgruppen besitzen die erfindungsgemäßen Verbindungen eine hohe Funktionalität und damit ein hohes Reaktionsvermögen und sind somit vielseitig als Zwischenprodukte verwendbar. Gegenstand der Erfindung ist auch ein Verfahren zur Herstellung der Ester der Formel (I) sowie ihre Verwendung zur Herstellung von Copolymerisaten.

Der in erster Stufe gebildete Carbamidsäure-β-hydroxyalkylester wird zweckmäßig in an sich bekannter Weise durch Umsetzung von cyclischem Alkylencarbonat und mindestens einem primären oder sekundären Amin, einem Hydroxyalkylmonoamin oder einem aliphatischen Diamin in der Schmelze oder in Gegenwart eines Lösemittels, gegebenenfalls unter Schutzgasatmosphäre hergestellt.

Der Carbamidsäure-β-hydroxyalkylester wird in zweiter Stufe mit α,β-olefinisch ungesättigten Verbindungen, die Dicarbonsäureeinheiten enthalten, bei 40 bis 200, vorzugsweise 60 bis 150°C gegebenenfalls in Gegenwart eines organischen Lösemittels und/oder eines Veresterungskatalysators zu einem Halbester umgesetzt, bis die Umsetzung nahezu vollständig ist.

In dritter Stufe wird der Halbester mit einer Epoxydverbindung bei 0 bis 150, vorzugsweise 40 bis 130°C zur Reaktion gebracht und der Ansatz so lange bei der Reaktionstemperatur gehalten, bis die Säurezahl unter 35, vorzugsweise unter 20 gesunken ist.

Geeignete cyclische Alkylencarbonate sind z. B. Äthylencarbonat und Propylencarbonat.

Primäre und sekundäre Alkyl- und Hydroxyalkylmonoamine mit 1 bis 30, vorzugsweise 1 bis 20 C-Atomen im Alkylrest sind z. B. folgende: Methylamin, Äthylamin, die verschiedenen Propyl-, Butyl- und Pentylamine, Hexylamin, 2-Methyl- und 2-Äthylhexylamin, n-Octylamin, 6-Methyl-2-heptanamin, Tridecylamin, Stearylamin, Mono- und Diäthanolamin, Methyl-Äthanolamin, 2-Aminoethoxyäthanol, Aminoäthyläthanolamin, einzeln oder im Gemisch. Bevorzugt sind N-Butylamin, N-Octylamin, 2-Äthylhexylamin, Äthanolamin und Diäthanolamin.

Geeignete Diamine besitzen die allgemeine Formel $H_2N-(CH_2)_x-NH_2$, in der x eine ganze Zahl von 2 - 10, vorzugsweise von 2 - 6 bedeutet und sind beispielsweise Äthylendiamin, Propylendiamin, Tetramethylendiamin und Hexamethylendiamin.

Ungesättigte, polymerisierbare Dicarbonsäureeinheiten enthaltende Verbindungen sind z. B. α,β-olefinisch

ungesättigte Dicarbonsäuren, deren Anhydride, sowie Mono- und Dialkylester mit 1 bis 8, vorzugsweise 1 bis 4 C-Atomen in der Alkylgruppe wie Maleinsäure, Fumarsäure, Itaconsäure, deren Methyl-, Äthyl-, Äthylhexyl-, Octyl- oder Dibutylester, vorzugsweise aber Maleinsäureanhydrid (MSA).

Geeignete Epoxydverbindungen sind beispielsweise Alkylenoxyde wie Äthylenoxyd, Propylenoxyd, Hexenoxyd, Dodecen-1-oxyd, ferner Glycid, Glycidyläther, z. B. Butyl-, p-tert.-Butyl-, Butylhexyl- und Kresylglycidyläther, sowie Glycidylester z. B von α-Alkylalkanmonocarbonsäuren der Summenformel $C_{12-14}H_{22-26}O_3$ einzeln oder im Gemisch. Dem Glycidylrest im Glycidylester der α-Alkylalkanmonocarbonsäuren und/oder α,α-Dialkylalkanmonocarbonsäuren kommt die Summenformel $C_3H_5O$ zu. Die α-Alkylalkansäuren- und α,α-Dialkylalkansäuren-Gemische stellen Monocarbonsäuren dar, die eine $C_9$-, $C_{10}$- und $C_{11}$-Kette enthalten (im folgenden Glycidylester genannt).

Die Säuren sind völlig gesättigt und sind am α-ständigen Kohlenstoffatom sehr stark substituiert. Säuren mit zwei Wasserstoffatomen am α-Kohlenstoffatom sind nicht vorhanden und nur 6 - 7, dieser Säuren enthalten ein Wasserstoffatom. Außerdem kommt zyklisches Material vor (Deutsche Farbenzeitschrift Heft 10/16. Jahrgang, Seite 435). Bevorzugt sind solche α-Alkylalkanmonocarbonsäuren und/oder α,α-Dialkylalkanmonocarbonsäuren, die durch Umsetzung von Tripropylen, Kohlenmonoxyd und Wasser erhalten worden sind und fast nur aus stark verzweigten Monocarbonsäuren mit 10 C-Atomen bestehen. Vorzugsweise werden Äthylenoxid, Propylenoxid und Glycidylester eingesetzt.

Die Umsetzungen in den einzelnen Stufen können in der Schmelze oder auch in Lösemittel durchgeführt werden. Hierfür sind inerte Lösemittel, z. B. Dimethylglykol, Dimethyldiglykol, Äthylglykolacetat und Methoxypropylacetat geeignet.

Als Veresterungskatalysatoren, die bei der Umsetzung der Carbamidsäure-β-hydroxyalkylester mit α,β-olefinisch ungesättigten Dicarbonsäureeinheiten eingesetzt werden können, eignen sich besonders basische Katalysatoren, z. B. Zinkacetat, Zinnoctoat, Zirkonoctoat, Dibutylzinndilaurat, Diazabicyclooctan, tertiäre Amine wie Triäthylamin und basische heterocyclische Verbindungen wie 2-Äthyl-4-methyl-imidazol u.a., vorzugsweise Lithium-Benzoat. Die Katalysatoren werden im allgemeinen in Mengen von 0,1 bis 0,9, vorzugsweise 0,2 bis 0,7 Gew.-%, bezogen auf den Gesamtansatz, zugegeben.

Die molaren Einsatzmengen der Ausgangsstoffe sind im allgemeinen äquimolar, so daß das Verhältnis von cyclischem Alkylencarbonat : Monoamin : Dicarbonsäureeinheit : Epoxyd (1 : 1 : 1 : 1) beträgt. Bevorzugt können bis zu 1,15 Mol Alkylencarbonat eingesetzt werden. Bei flüchtigen Epoxydverbindungen ist es auch möglich, eine Erhöhung der Einsatzmenge vorzunehmen, die bis zu 75 % betragen kann. Nach der Umsetzung, d. h. nachdem die Säurezahl unter 20 gesunken ist, wird der Überschuß der Epoxidverbindung unter vermindertem Druck abdestilliert.

Werden in der ersten Stufe bei der Herstellung der Carbamidsäure-β-hydroxyalkylester aliphatische Diamine eingesetzt, beträgt das molare Verhältnis der Alkylencarbonate zu Diaminen im allgemeinen 2-2,3 : 1. Der erhaltene Bis-ester wird weiter mit Dicarbonsäureeinheiten und Epoxidverbindungen im Molverhältnis 1 : 1 : 1 umgesetzt, wobei auch in diesem Falle die Aussagen bezüglich der flüchtigen Epoxidverbindungen Gültigkeit haben.

Die erfindungsgemäßen Carbamoyloxyalkyldicarbonsäureester können eine vielseitige technische Verwendung finden, z. B. zur Herstellung von Copolymerisaten, die auf Grund ihrer verschiedenen funktionellen Gruppen ausgezeichnete Eigenschaften aufweisen.

In den nachfolgenden Beispielen bedeutet T Gewichtsteile und % Gewichts-%.

**Beispiele**

Die erfindungsgemäßen Verbindungen der Formel I wurden nach folgender allgemeiner Vorschrift erhalten:

Das cyclische Alkylencarbonat wurde geschmolzen und 1 Mol Aminkomponente bei 70 bis 80°C nach Maßgabe der exothermen Reaktion zudosiert. Der Ansatz wurde anschließend so lange bei der Reaktionstemperatur gehalten, bis der Amingehalt einen Wert unter 0,2 mMol/g besaß.

1 Mol des erhaltenen Carbamidsäure-β-hydroxyalkylesters wurden unter Rühren in Gegenwart von Stickstoff als Inertgas erwärmt. Bei 60°C wurde unter Maßgabe der exothermen Reaktion Maleinsäureanhydrid und 0,25 % Triäthylamin bzw. 0,63 % Lithium-Benzoat, berechnet auf den Gesamtansatz, zugegeben. Die Zugabe an MSA wurde so gesteuert, daß eine Reaktionstemperatur von 80°C nicht überschritten wurde. Der Ansatz wurde nach Zugabe des MSA noch so lange bei 80°C gehalten, bis die Bestimmung der Säurezahlen im wäßrigen bzw. äthanolalkoholischen Medium nahezu die theoetische Säurezahl ergab.

Der gebildete Halbester wurde bei 80°C innerhalb von zwei Stunden mit den in der Tabelle angegebenen Mengen einer Epoxydverbindung versetzt. Nach der Zugabe wurde der Ansatz in Abhängigkeit von der eingesetzten Epoxydverbindung bei Temperaturen zwischen 80 und 125°C gehalten, bis die Säurezahl einen Wert von $< 20$ erreicht hat.

Überschüssige flüchtige Epoxidverbindungen wurden unter vermindertem Druck abdestilliert.

In der nachfolgenden Tabelle ist die Zusammensetzung der Beispiele und ihre Kenndaten aufgeführt. Zur Charakteristik der erfindungsgemäßen neuen Monomere werden die OH-Zahl, der prozentuale Anteil der Doppelbindungen und das Molekulargewicht der einzelnen Verbindungen angegeben. Das Molekulargewicht wurde nach der Methode der Gel-Permeations-Chromatographie bestimmt. (vgl. J.C. Moore, J. Polymer Sci, A-2 (1964) S. 835). Weiterhin sind die theoretischen und gefundenen Analysenwerte der Elementaranalyse angegeben.

**Tabelle 1**

| | A: Alkylencarbonat | B: Amin | C-Dicarbonsäureeinheit |
|---|---|---|---|
| 1 | Äthylencarbonat | n-Butylamin | MSA |
| 2 | " | " | " |
| 3 | " | n-Octylamin | " |
| 4 | " | 2-Äthylhexylamin | " |
| 5 | " | " | " |
| 6 | " | " | " |
| 7 | " | Äthanolamin | " |
| 8 | " | Diäthanolamin | " |
| 9 | " | " | " |
| 10 | " | Hexamethylendiamin | " |

| | D: Epoxid | E: mol. Verhältnis A : B : C : D | F: $NH_2$-Gehalt [mmol/g] |
|---|---|---|---|
| 1 | Propylenoxid | 1.05 : 1 : 1 : 1 | 0,14 |
| 2 | GE | 1 : 1 : 1 : 1 | 0,13 |
| 3 | GE | 1,1 : 1 : 1 : 1 | 0,19 |
| 4 | Äthylenoxid | 1,01 : 1 : 1 : 1,2 | 0,19 |
| 5 | Propylenoxid | 1,1 : 1 : 1 : 1,1 | 0,1 |
| 6 | GE | 1,1 : 1 : 1 : 1 | 0,15 |
| 7 | Propylenoxid | 1,05 : 1 : 1 : 1,4 | 0,06 |
| 8 | Propylenoxid | 1,05 : 1 : 1 : 1,6 | 0,19 |
| 9 | GE | 1,1 : 1 : 1 : 1 | 0,17 |
| 10 | Propylenoxid | 2,2 : 1 : 1 : 1,1 | 0,1 |

| | G: Katalysator | H: Säurezahl I theor. | wäßrig | alkoholisch |
|---|---|---|---|---|
| 1 | 0,63 % Li-Benzoat | 211 | 211 | 209 |
| 2 | " | 217 | 242 | 227 |
| 3 | " | 177 | 183 | 180 |
| 4 | " | 177 | 193 | 183 |
| 5 | 0,25 % Triäthylamin | 177 | 191 | 180 |
| 6 | 0,63 % Li-Benzoat | 177 | 177 | 176 |
| 7 | 0,63 % Li-Benzoat | 233 | 229 | 227 |
| 8 | 0,63 % Li-Benzoat | 193 | 196 | 193 |
| 9 | 0,63 % Li-Benzoat | 193 | 196 | 193 |
| 10 | 0,63 % Li-Benzoat | 144 | 155 | 150 |

GE = Glycidylester

| | I: Nachreaktion bis °C | K: Säurezahl II | L: OH-Zahl theor. | gef. |
|---|---|---|---|---|
| 1 | 125 | 13,1 | 177 | 173 |
| 2 | 80 | 6,5 | 112 | 130 |
| 3 | 80 | 5,2 | 100 | 110 |
| 4 | 125 | 5,3 | 157 | 163 |
| 5 | 125 | 12,0 | 150 | 151 |
| 6 | 80 | 7,9 | 100 | 117 |
| 7 | 125 | 4,9 | 367 | 342 |
| 8 | 125 | 13,2 | 482 | 435 |
| 9 | 80 | 10,9 | 314 | 316 |
| 10 | 125 | 7,0 | 250 | 212 |

| | M: % -C=C- theor. | gef. | N: Molekulargewicht theor. | GPC |
|---|---|---|---|---|
| 1 | 7,57 | 6,5 | 317 | 358 |

| | | | | |
|---|---|---|---|---|
| 2 | 4,76 | 4,5 | 504 | 552 |
| 3 | 4,29 | 4,2 | 562 | 586 |
| 4 | 6,69 | 6,5 | 359 | 444 |
| 5 | 6,43 | 5,9 | 375 | 378 |
| 6 | 4,29 | 4,3 | 562 | 560 |
| 7 | 7,87 | 7,4 | 305 | 349 |
| 8 | 6,88 | 6,0 | 349 | 464 |
| 9 | 4,48 | 4,2 | 536 | 584 |

O: Elementaranalyse

| | % C theor. | % H theor. | % N theor. | % O theor. |
|---|---|---|---|---|
| 1 | 52,5(53,0) | 7,2(7,3) | 4,0(4,4) | 35,5(35,3) |
| 2 | 58,8(59,5) | 8,3(8,5) | 3,1(2,8) | 30,9(29,3) |
| 3 | 60,4(62,1) | 8,8(9,1) | 2,5(2,5) | 26,3(26,4) |
| 4 | 56,5(56,8) | 8,3(8,1) | 4,2(3,9) | 31,6(31,2) |
| 5 | 57,3(57,9) | 8,2(8,3) | 4,0(3,8) | 29,8(30,0) |
| 6 | 61,8(62,1) | 9,1(9,1) | 3,0(2,5) | 26,6(26,4) |
| 7 | 47,6(47,3) | 6,3(6,2) | 4,7(4,6) | 41,5(42,0) |
| 8 | 48,4(48,1) | 7,0(6,6) | 4,0(4,0) | 42,7(41,3) |
| 9 | 55,9(55,9) | 7,8(7,98) | 2,7(2,61) | 33,2(33,5) |

**Patentansprüche** für die Vertragsstaaten: BE, CH, LI, DE, FR, GB, IT, NL, SE

1. Polymerisierbare, Hydroxylgruppen tragende Carbamoyloxyalkyldicarbonsäureester der allgemeinen Formel (I)

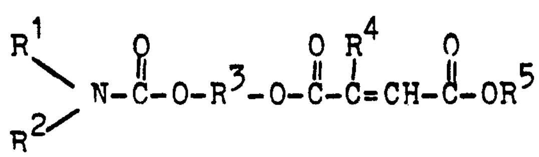

(I)

worin
$R^1$ Wasserstoff, Alkyl, Hydroxyalkyl mit jeweils 1 bis 30 C-Atomen im Alkylrest,
$R^2$ Alkyl, Hydroxyalkyl mit jeweils 1 bis 30 C-Atomen im Alkylrest oder den Rest

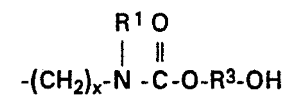

mit der Maßgabe, daß $R^1$ Wasserstoff und x eine ganze Zahl von 2 bis 10 ist,
$R^3$ lineares oder verzweigtes Alkylen mit 2 bis 5 C-Atomen,
$R^4$ Wasserstoff oder Methyl und
$R^5$ Hydroxyalkyl, Hydroxyaminoalkyl mit jeweils 2 bis 20 C-Atomen im Alkylrest oder ein solcher Alkylrest, der noch Ester- und/oder Äthergruppen enthält, darstellt.

2. Verfahren zur Herstellung polymerisierbarer Hydroxylgruppen tragender Carbamoyloxyalkyldicarbonsäureester der allgemeinen Formel (I), dadurch gekennzeichnet, daß
A) in erster Stufe ein Alkylencarbonat mit einem primären oder sekundären Alkyl- oder Hydroxyalkylmonoamin mit 1 bis 30 C-Atomen im Alkylrest oder einem aliphatischen Diamin mit 2 bis 10 C-Atomen im Alkylenrest bei 0 bis 150°C umgesetzt wird, der gebildete Carbamidsäure-β-hydroxyalkylester
B) in zweiter Stufe mit α,β-olefinisch ungesättigten Dicarbonsäureeinheiten mit 4 bis 5 C-Atomen allein oder in Gegenwart eines Katalysators und/oder organischer Lösungsmittel bei 40 bis 200°C acyliert wird und
C) das Reaktionsprodukt in dritter Stufe mit einer Epoxydverbindung bei 0 bis 150°C zur Reaktion gebracht wird, bis eine Säurezahl < 35 erreicht ist.

2. Verfahren nach Anspruch 1, dadurch gekennzeichnet, daß die Umsetzung in dritter Stufe C) bei 40 bis 130°C bis zum Erreichen einer Säurezahl < 20 durchgeführt wird.

3. Verfahren nach Anspruch 1 oder 2, dadurch gekennzeichnet, daß das molare Verhältnis von cyclischem Alkylencarbonat : Monoamin : Dicarbonsäureeinheit : Epoxyd (1 - 1,15) : 1 : 1 : (1 - 1,75) beträgt.

4. Verfahren nach Anspruch 1 oder 2, dadurch gekennzeichnet, daß das molare Verhältnis von cyclischem Alkylencarbonat : Diamin : Dicarbonsäureeinheit : Epoxyd (2 - 2,3) : 1 : 1 : (1 - 1,75) beträgt.

5. Verfahren nach einem oder mehreren der Ansprüche 1 bis 4, dadurch gekennzeichnet, daß in der Formel (I)
$R^1$ Wasserstoff, Alkyl, Hydroxyalkyl mit jeweils 2 bis 20 C-Atomen im Alkylrest,

$R^2$ Alkyl, Hydroxyalkyl mit jeweils 2 - 20 C-Atomen im Alkylrest, oder der Rest

$R^1$ O
| ||
$-(CH_2)_x$-N -C-O-$R^3$-OH

mit der Maßgabe, daß $R^1$ Wasserstoff ist und x eine ganze Zahl von 2 - 6 bedeutet,
$R^3$ ein Alkylen mit bis zu 3 C-Atomen,
$R^4$ Wasserstoff und
$R^5$ ein Hydroxyalkylrest mit 2 bis 14 C-Atomen im Alkylrest oder ein Hydroxyalkylesterrest einer verzweigten gesättigten Fettsäure mit 9 bis 11 C-Atomen mit 2 bis 14 C-Atomen im Alkylrest ist.

6. Verwendung der polymerisierbaren Hydroxylgruppen tragenden Carbamoyloxyalkyldicarbonsäureester gemäß Anspruch 1 zur Herstellung von Copolymerisaten.

**Patentansprüche** für den Vertragsstaat: AT

1 Verfahren zur Herstellung polymerisierbarer Hydroxylgruppen tragender Carbamoyloxyalkyldicarbonsäureester der allgemeinen Formel (I),

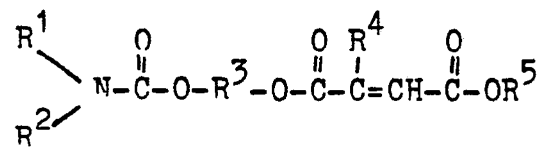
(I)

worin
$R^1$ Wasserstoff, Alkyl, Hydroxyalkyl mit jeweils 1 bis 30 C-Atomen im Alkylrest,
$R^2$ Alkyl, Hydroxyalkyl mit jeweils 1 bis 30 C-Atomen im Alkylrest oder den Rest

$R^1$ O
| ||
$-(CH_2)_x$-N -C-O-$R^3$-OH

mit der Maßgabe, daß $R^1$ Wasserstoff und x eine ganze Zahl von 2 bis 10 ist,
$R^3$ lineares oder verzweigtes Alkylen mit 2 bis 5 C-Atomen,
$R^4$ Wasserstoff oder Methyl und
$R^5$ Hydroxyalkyl, Hydroxyaminoalkyl mit jeweils 2 bis 20 C-Atomen im Alkylrest oder ein solcher Alkylrest der noch Ester- und/oder Äthergruppen enthält, darstellt, dadurch gekennzeichnet, daß
A) in erster Stufe ein Alkylencarbonat mit einem primären oder sekundären Alkyl oder Hydroxyalkylamin mit 1 bis 30 C-Atomen im Alkylrest bei 0 bis 150°C umgesetzt wird, der gebildete Carbamidsäure-β-hydroxyalkylester
B) in zweiter Stufe mit α,β-olefinisch ungesättigten Dicarbonsäureeinheiten mit 4 bis 5 C-Atomen allein oder in Gegenwart eines Katalysators und/oder organischer Lösungsmittel bei 40 bis 200°C acyliert wird und
C) das Reaktionsprodukt in dritter Stufe mit einer Epoxydverbindung bei 0 bis 150°C zur Reaktion gebracht wird, bis eine Säurezahl < 35 erreicht ist.

2. Verfahren nach Anspruch 1, dadurch gekennzeichnet, daß die Umsetzung in dritter Stufe C) bei 50 bis 100°C bis zum Erreichen einer Säurezahl < 20 durchgeführt wird.

3. Verfahren nach Anspruch 1 oder 2, dadurch gekennzeichnet, daß das molare Verhältnis von cyclischem Alkylencarbonat : Monoamin : Dicarbonsäureeinheit : Epoxyd (1 - 1,15) : 1 : 1 : (1 - 1,75) beträgt.

4. Verfahren nach Anspruch 1 oder 2, dadurch gekennzeichnet, daß das molare Verhältnis von cyclischem Alkylencarbonat : Diamin : Dicarbonsäureeinheit : Epoxyd (2 - 2,3) : 1 : 1 : (1 - 1,75) beträgt.

5. Verfahren nach einem oder mehreren der Ansprüche 1 bis 4, dadurch gekennzeichnet, daß in der Formel (I)
$R^1$ Wasserstoff, Alkyl, Hydroxyalkyl mit jeweils 2 bis 20 C-Atomen im Alkylrest,
$R^2$ Alkyl, Hydroxyalkyl mit jeweils 2 - 20 C-Atomen im Alkylrest, oder der Rest

$R^1$ O
| ||
$-(CH_2)_x$-N -C-O-$R^3$-OH

mit der Maßgabe, daß $R^1$ Wasserstoff ist und x eine ganze Zahl von 2 - 6 bedeutet,
$R^3$ ein Alkylen mit bis zu 3 C-Atomen,
$R^4$ Wasserstoff und
$R^5$ ein Hydroxyalkylrest mit 2 bis 14 C-Atomen im Alkylrest oder ein Hydroxyalkylesterrest einer verzweigten

gesättigten Fettsäure mit 9 bis 11 C-Atomen mit 2 bis 14 C-Atomen im Alkylrest ist.

6. Verwendung der polymerisierbaren Hydroxylgruppen tragenden Carbamoyloxyalkyldicarbonsäureester gemäß Anspruch 1 zur Herstellung von Copolymerisaten.

**Revendications** pour les Etats contractants: BE, CH, LI, DE, FR, GB, IT, NL, SE

1. Esters carbamoyloxy-alkyliques d'acides dicarboxyliques porteurs de radicaux hydroxy, polymérisables, qui répondent à la formule générale I:

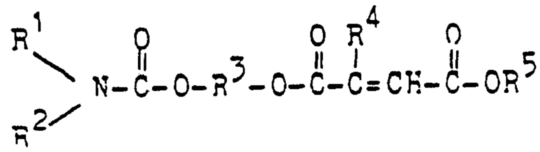

(I)

dans laquelle:

$R^1$ représente l'hydrogéne, un alkyle en $C_1$-$C_{30}$ ou un hydroxy-alkyle également en $C_1$-$C_{30}$,

$R^2$ représente un alkyle en $C_1$-$C_{30}$, un hydroxy-alkyle également en $C_1$-$C_{30}$ ou un radical

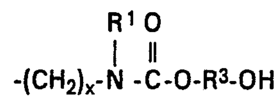

avec la condition que $R^1$ représente l'hydrogène et x un nombre entier de 2 à 10,

$R^3$ représente un alkylène linéaire ou ramifié qui contient de 2 à 5 atomes de carbone,

$R^4$ représente l'hydrogène ou un méthyle et

$R^5$ représente un radical hydroxy-alkyle ou hydroxy-amino-alkyle dont l'alkyle contient de 2 à 20 atomes C, ou un radical alkyle de ce genre qui porte en outre des radicaux d'esters et/ou d'éthers.

2. Procédé pour préparer des esters carbamoyloxyalkyliques d'acides dicarboxyliques porteurs de radicaux hydroxy, polymérisables et répondant à la formule générale I, procédé caractérisé en ce que:

A) dans une première étape on fait réagir, à une température de 0 à 150°C, un carbonate d'alkylène avec une alkyl- ou hydroxyalkyl-monoamine primaire ou secondaire dont l'alkyle contient de 1 à 30 atomes de carbone, ou une diamine aliphatique dont le radical alkylène contient de 2 à 10 atomes de carbone, de manière à obtenir un carbamate d'hydroxy-alkyle,

B) dans une deuxième étape on acyle ce carbamate d'hydroxy-alkyle avec des composantes acides dicarboxyliques qui renferment une double liaison éthylénique en $\alpha,\beta$ et qui contiennent 4 ou 5 atomes de carbone, seules ou en présence d'un catalyseur et/ou d'un solvant organique, à une température de 40 à 200°C, et

C) dans une troisième étape on fait réagir le produit réactionnel avec un composé époxydique à une température de 0 à 150°C jusqu'à ce qu'un indice d'acide inférieur à 35 soit atteint.

3. Procédé selon la revendication 2 caractérisé en ce qu'on effectue la réaction, dans la troisième étape C), à une température de 40 à 130°C jusqu'à ce qu'on atteigne un indice d'acide inférieur à 20.

4. Procédé selon l'une des revendications 2 et 3 caractérisé en ce que le rapport molaire entre le carbonate d'alkylène cyclique, la monoamine, la composante acide dicarboxylique et l'époxyde est de (1 - 1,15) : 1 : 1 : (1 - 1,75).

5. Procédé selon l'une des revendications 2 et 3 caractérisé en ce que le rapport molaire entre le carbonate d'alkylène cyclique, la diamine, la composante acide dicarboxylique et l'époxyde est de (2 - 2,3) : 1 : 1 : (1 - 1,75).

6. Mode d'exécution selon l'une quelconque des revendications 1 à 5, caractérisé en ce que, dans la formule I,

$R^1$ représente l'hydrogène ou représente un radical alkyle ou un radical hydroxy-alkyle contenant chacun de 2 à 20 atomes de carbone dans la partie alkyle,

$R^2$ représente un alkyle ou un hydroxy-alkyle contenant chacun de 2 à 20 atomes de carbone dans la partie alkyle, ou encore représente un radical

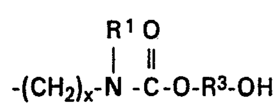

à la condition que $R^1$ représente l'hydrogène et que x désigne un nombre entier de 2 à 6,

$R^3$ représente un alkylène contenant au plus 3 atomes de carbone,

$R^4$ représente l'hydrogène, et

$R^5$ représente un radical hydroxy-alkyle dont la partie alkyle contient de 2 à 14 atomes de carbone, ou représente un radical d'ester hydroxy-alkylique dont la partie alkyle contient de 2 à 14 atomes de carbone et

qui dérive d'un acide gras saturé ramifié contenant de 9 à 11 atomes de carbone.

7. Application des esters carbamoyloxy-alkyliques d'acides dicarboxyliques porteurs de radicaux hydroxy, polymérisables, selon la revendication 1 pour la préparation de copolymères.

**Revendications** pour l'Etat contractant: AT

1. Procédé pour préparer des esters carbamoyloxyalkyliques d'acides dicarboxyliques porteurs de radicaux hydroxy, polymérisables et répondant à la formule générale I:

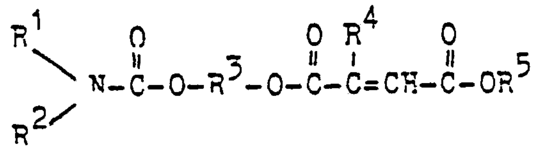 (I)

dans laquelle:

$R^1$ représente l'hydrogène, un alkyle en $C_1$-$C_{30}$ ou un hydroxy-alkyle également en $C_1$-$C_{30}$,

$R^2$ représente un alkyle en $C_1$-$C_{30}$, un hydroxy-alkyle également en $C_1$-$C_{30}$ ou un radical

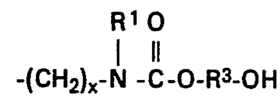

avec la condition que $R^1$ représente l'hydrogène et x un nombre entier de 2 à 10,

$R^3$ représente un alkylène linéaire ou ramifié qui contient de 2 à 5 atomes de carbone,

$R^4$ représente l'hydrogène ou un méthyle et

$R^5$ représente un hydroxy-alkyle ou un hydroxy-amino-alkyle contenant chacun de 2 à 20 C dans la partie alkyle, ou un radical alkyle de ce genre qui porte en outre des radicaux d'esters et/ou d'éthers,

procédé caractérisé en ce que:

A) dans une première étape on fait réagir, à une température de 0 à 150° C, un carbonate d'alkylène avec une alkyl- ou hydroxyalkyl-amine primaire ou secondaire dont la partie alkyle contient de 1 à 30 atomes de carbone, de manière à obtenir un carbamate de β-hydroxy-alkyle,

B) dans une deuxième étape on acyle ce carbamate avec des composantes acides dicarboxyliques qui contiennent 4 ou 5 atomes de carbone et qui renferment une double liaison éthylénique en α,β, seules ou en présence d'un catalyseur et/ou de solvants organiques, à une temperature de 40 à 200° C, et

C) on fait réagir le produit réactionnel, dans une troisième étape, avec un composé époxydique à une température de 0 à 150° C jusqu'à ce que l'indice d'acide atteigne une valeur inférieure à 35.

2. Procédé selon la revendication 1 caractérisé en ce qu'on effectue la réaction, dans la troisième étape C), à une température de 50 à 100° C jusqu'à ce que l'indice d'acide soit devenu inférieur à 20.

3. Procédé selon l'une des revendications 1 et 2 caractérisé en ce que le rapport molaire entre le carbonate d'alkylène cyclique, la monoamine, la composante acide dicarboxylique et l'époxyde est de (1 - 1,15) : 1 : 1 : (1 - 1,75).

4. Procédé selon l'une des revendications 1 et 2 caractérisé en ce que le rapport molaire entre le carbonate d'alkylène cyclique, la diamine, la composante acide dicarboxylique et l'époxyde est de (2 - 2,3) : 1 : 1 : (1 - 1,75).

5. Procédé selon l'une quelconque des revendications 1 à 4, caractérisé en ce que, dans la formule I,

$R^1$ représente l'hydrogène ou représente un radical alkyle ou un radical hydroxy-alkyle contenant chacun de 2 à 20 atomes de carbone dans la partie alkyle,

$R^2$ représente un alkyle ou un hydroxy-alkyle contenant chacun de 2 à 20 atomes de carbone dans la partie alkyle, ou encore représente un radical

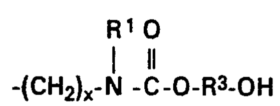

à la condition que $R^1$ représente l'hydrogène et que x désigne un nombre entier de 2 à 6,

$R^3$ représente un alkylène contenant au plus 3 atomes de carbone,

$R^4$ représente l'hydrogène, et

$R^5$ représente un radical hydroxy-alkyle dont la partie alkyle contient de 2 à 14 atomes de carbone, ou représente un radical d'ester hydroxy-alkylique dont la partie alkyle contient de 2 à 14 atomes de carbone et qui dérive d'un acide gras saturé ramifié contenant de 9 à 11 atomes de carbone.

6. Application des esters carbamoyloxy-alkyliques d'acides dicarboxyliques porteurs de radicaux hydroxy, polymérisables, selon la revendication 1 pour la préparation de copolymères.

**Claims** for the contracting states: BE, CH, LI, DE, FR, GB, IT, NL, SE

1. A polymerizable carbamoyloxyalkyldicarboxylic acid ester, carrying hydroxyl groups, of the general formula (I)

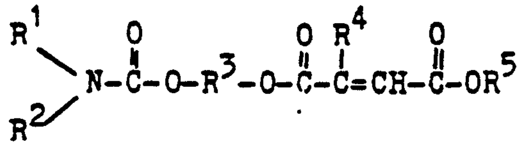

(I)

in which

$R^1$ represents hydrogen or alkyl or hydroxyalkyl having in each case 1 to 30 carbon atoms in the alkyl radical,
$R^2$ denotes alkyl or hydroxyalkyl having in each case 1 to 30 carbon atoms in the alkyl radical, or the radical

$R^1$ O
| ||
$-(CH_2)_x-N$ $-C-O-R^3-OH$

subject to the proviso that $R^1$ is hydrogen and x is an integer from 2 to 10,
$R^3$ represents linear or branched alkylene having 2 to 5 carbon atoms,
$R^4$ represents hydrogen or methyl and
$R^5$ represents hydroxyalkyl or hydroxyaminoalkyl having in each case 2 to 20 carbon atoms in the alkyl radical or an alkyl radical of this type which also contains ester and/or ether groups.

2. A process for the preparation of polymerizable carbamoyloxyalkyldicarboxylic acid esters, carrying hydroxyl groups, of the general formula (I), which comprises
A) in the first stage reacting an alkylene carbonate at 0 to 150°C with a primary or secondary alkylmonoamine or hydroxyalkylmonoamine having 1 to 30 carbon atoms in the alkyl radical or an aliphatic diamine having 2 to 10 carbon atoms in the alkylene radical,
B) in the second stage, acylating the resulting β-hydroxyalkyl carbamate at 40 to 200°C with α,β-olefinically unsaturated dicarboxylic acid units having 4 to 5 carbon atoms, alone or in the presence of a catalyst and/or organic solvents, and
C) in the third stage reacting the reaction product at 0 to 150°C with an epoxide compound until an acid number $< 35$ has been reached.

3. The process as claimed in claim 2, wherein the reaction in the third stage C) is carried out at 40 to 130°C until an acid number $< 20$ has been reached.

4. The process as claimed in claim 2 or 3, wherein the cyclic alkylene carbonate : monoamine : dicarboxylic acid unit : epoxide molar ratio is (1 - 1.15) : 1 : 1 : (1 - 1.75).

5. The process as claimed in claim 2 or 3, wherein the cyclic alkylene carbonate : diamine : dicarboxylic acid unit : epoxide molar ratio is (2 - 2.3) : 1 : 1 : (1 - 1.75).

6. An embodiment as claimed in one or more of claims 1 to 5, wherein, in the formula (I), $R^1$ is hydrogen or alkyl or hydroxyalkyl having in each case 2 to 20 carbon atoms in the alkyl radical, $R^2$ is alkyl or hydroxyalkyl having in each case 2-20 carbon atoms in the alkyl radical, or the radical

$R^1$ O
| ||
$-(CH_2)_x-N$ $-C-O-R^3-OH$

subject to the proviso that $R^1$ is hydrogen and x denotes an integer from 2 to 6,
$R^3$ is alkylene having up to 3 carbon atoms,
$R^4$ is hydrogen and
$R^5$ is a hydroxyalkyl radical having 2 to 14 carbon atoms in the alkyl radical or a hydroxyalkyl ester radical of a branched, saturated fatty acid of 9 to 11 carbon atoms, having 2 to 14 carbon atoms in the alkyl radical.

7. The use of the polymerizable carbamoyloxyalkyldicarboxylic acid esters, carrying hydroxyl groups, as claimed in claim 1, for the preparation of copolymers.

**Claims** for the contracting state: AT

1. A process for the preparation of polymerizable carbamoyloxyalkyldicarboxylic acid esters, carrying hydroxyl groups, of the formula (I)

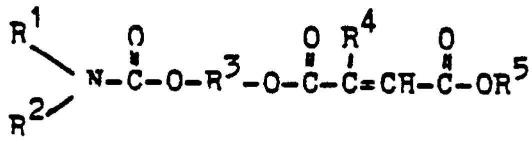 (I)

in which

$R^1$ represents hydrogen or alkyl or hydroxyalkyl having in each case 1 to 30 carbon atoms in the alkyl radical,

$R^2$ denotes alkyl or hydroxyalkyl having in each case 1 to 30 carbon atoms in the alkyl radical, or the radical

```
        R¹ O
        |  ||
-(CH2)x-N -C-O-R3-OH
```

subject to the proviso that $R^1$ is hydrogen and x is an integer from 2 to 10,

$R^3$ represents linear or branched alkylene having 2 to 5 carbon atoms,

$R^4$ represents hydrogen or methyl and

$R^5$ represents hydroxyalkyl or hydroxyaminoalkyl having in each case 2 to 20 carbon atoms in the alkyl radical or an alkyl radical of this type which also contains ester and/or ether groups, which comprises

A) in the first stage reacting an alkylene carbonate at 0 to 150°C with a primary or secondary alkylamine or hydroxyalkylmonoamine having 1 to 30 carbon atoms in the alkyl radical,

B) in the second stage, acylating the resulting β-hydroxyalkyl carbamate at 40 to 200°C with α,β-olefinically unsaturated dicarboxylic acid units having 4 to 5 carbon atoms, alone or in the presence of a catalyst and/or organic solvents, and

C) in the third stage reacting the reaction product at 0 to 150°C with an epoxide compound until an acid number $< 35$ has been reached.

2. The process as claimed in claim 1, wherein the reaction in the third stage C) is carried out at 50 to 100°C until an acid number $< 20$ has been reached.

3. The process as claimed in claim 1 or 2, wherein the cyclic alkylene carbonate : monoamine : dicarboxylic acid unit : epoxide molar ratio is (1 - 1.15) : 1 : 1 : (1 - 1.75).

4. The process as claimed in claim 1 or 2, wherein the cyclic alkylene carbonate : diamine : dicarboxylic acid unit : epoxide molar ratio is (2 - 2.3) : 1 : 1 : (1 - 1.75).

5. An embodiment as claimed in one or more of claims 1 to 4, wherein, in the formula (I),

$R^1$ is hydrogen or alkyl or hydroxyalkyl having in each case 2 to 20 carbon atoms in the alkyl radical,

$R^2$ is alkyl or hydroxyalkyl having in each case 2 - 20 carbon atoms in the alkyl radical, or the radical

```
        R¹ O
        |  ||
-(CH2)x-N -C-O-R3-OH
```

subject to the proviso that $R^1$ is hydrogen and x denotes an integer from 2 to 6,

$R^3$ is alkylene having up to 3 carbon atoms,

$R^4$ is hydrogen and

$R^5$ is a hydroxyalkyl radical having 2 to 14 carbon atoms in the alkyl radical or a hydroxyalkyl ester radical of a branched, saturated fatty acid of 9 to 11 carbon atoms, having 2 to 14 carbon atoms in the alkyl radical.

6. The use of the polymerizable carbamoyloxyalkyldicarboxylic acid esters, carrying hydroxyl groups, as claimed in claim 1, for the preparation of copolymers.